**Europäisches Patentamt**

**European Patent Office**

**Office européen des brevets**

(19)

(11) Veröffentlichungsnummer: **0 099 862**

**A1**

(12) # EUROPÄISCHE PATENTANMELDUNG

(21) Anmeldenummer: **83830041.6**

(22) Anmeldetag: **25.02.83**

(51) Int. Cl.³: **B 60 T 13/14**

(30) Priorität: **16.03.82 IT 4800282**

(43) Veröffentlichungstag der Anmeldung:
**01.02.84 Patentblatt 84/5**

(84) Benannte Vertragsstaaten:
**AT BE CH DE FR GB LI LU NL SE**

(71) Anmelder: **Ferruzza, Roberto**
**Strada Statale 386, Km. 1**
**I-92016 Ribera (Agrigento)(IT)**

(72) Erfinder: **Ferruzza, Roberto**
**Strada Statale 386, Km. 1**
**I-92016 Ribera (Agrigento)(IT)**

(74) Vertreter: **Sneider, Massimo**
**Lenzi & C. Via Lucania, 13**
**I-00187 Roma(IT)**

(54) **Bremsanlage.**

(57) Eine aus zwei Gruppen gebildete Bremsanlage, von denen die eine (A) an der Zugmaschine montiert ist und die andere (B) an einem Anhänger montiert ist, wobei die charakteristischen und grundlegenden Elemente der ersten Gruppe eine Steuerungsbüchse (10), ein Strömungsteiler (11) und eine Bremsensteuerung (12) sind, während die grundlegenden Elemente jeder zweiten Gruppe ein an ein automatisches Ventil (30) gekoppelter Ausgleichsbehälter (31) sind. Die Verbindung zwischen der ersten Gruppe und der zweiten Gruppe erfolgt über Schnellkupplungen (1-2).

EP 0 099 862 A1

Anmelder : Roberto FERRUZZA , Ribera (Agrigento/Italien).

0099862

"Dauerbremsanlage"

BEZEICHNUNG GEÄNDERT
siehe Titelseite

Beschreibung

Es ist bekannt , dass , wenn eine Zugmaschine einen oder mehrer Anhänger schleppt , es im Fall einer Geschwindigkeitsabnahme oder eines Anhaltens erforderlich ist dafür Sorge zu tragen auch diese letzteren gleichzeitig mit der Zugmaschine abzubremsen , um zu vermeiden , dass die lebendige Kraft , mit der die Anhänger versehen sind , sich auf die Zugmaschine absetzt .

Es wurden deshalb Bremsen für Anhänger verschiedener-Art verwirklicht , deren hauptsächliches Merkmal es ist durchgehend und automatisch zu sein .

Es ist auch bekannt , dass die üblicherweise gebrauchten Bremsenarten fluiddynamische Bremsen sind , welche , je nachdem das Fluid Luft , Öl oder Wasser ist , aerodynamisch oder pneumatisch , öldynamisch und hydrodynamisch heissen .

Zur Betätigung der Bremsen eines Anhängers werden normalerweise pneumatische Bremsen verwendet , welche die Möglichkeit haben automatisch zu funktionieren . Eine automatische pneumatische Bremse ist aus einem von einem Hauptmotor betätigten Kompressor , aus einem Presslufthauptbehälter und aus einer Hauptrohrleitung gebildet , welche unter Druck stehende Luft liefert und welche längs des gesamten Schleppzuges läuft . Jeder Anhänger ist dann mit einem Hilfsbehälter versehen , der von der Hauptleitung unter Druck gehalten wird und jener ist , welcher letzten Endes die Betätigung der Bremse jeden Anhängers auslöst .

Es ist die Aufgabe der vorliegenden Erfindung eine Bremsanlage zu schaffen , welche an von einer Zugmaschine und einem oder mehreren Anhängern gebildeten Fahrzeugen , insbesondere Ackerschleppern , angewandt werden kann .

Die erfindungsgemässe Anlage ist aus zwei Gruppen gebildet , von denen die eine an der Zugmaschine und die andere an jedem Anhänger montiert sind .

Das grundlegende Element der ersten Gruppe ist erfindungsgemäss ein Strömungsteiler , während das grundlegende Element der zweiten Gruppe ein Speicher-Ausgleichsbehälter von Pressfluid ist , welcher Ausgleichsbehälter nur im Fall einer unvorhergesehenen Unterbrechung der Versorgungsleitkanäle des unter Druck stehenden Fluids in die Bremsung eingeift . Mit anderen Worten das Fluid des Speicher-Ausgleichsbehälters bewirkt das Bremsen nur im Fall einer unvorhergesehenen Unterbrechung .

Es ist ein weiters Merkmal der in Rede stehenden Anlage , dass sie mit jeder beliebigen Fluidart funktionieren kann , wobei jedoch die in den öldynamischen Anlagen
in allgemeinen zugegene hydrauliche Flüssigkeit bevorzugt ist .

Anhand der anliegenden Zeichnung , in der das Schema der erfindungsgemässen Dauerbremsanlage beispielsweise wiedergegeben ist , wird der Erfindungsgegenstand
beim Lesen der nachstehenden ausführlichen Beschreibung
besser verständlich .

Unter Bezugnahme auf diese Zeichnung ist die erfindungsgemässe Bremsanlage aus zwei Blöcken A und B gebildet , von denen der erste an der Zugmaschine montiert
ist und der zweite an jedem Anhänger montiert ist . Die
Verbindung zwischen der Gruppe A und der Gruppe B geschieht über Schnellkupplungen 1,2 beliebiger bekannter
Art .

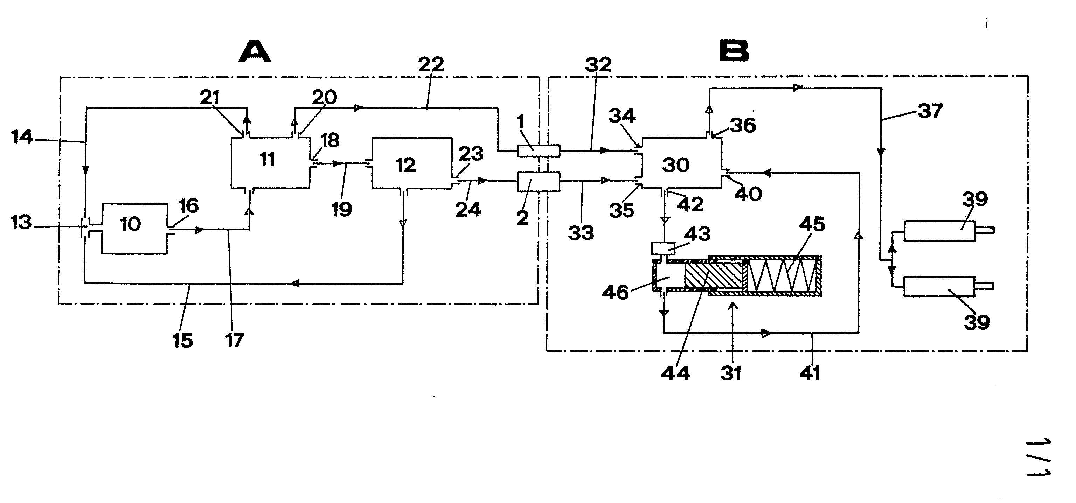

Wie man aus der Zeichnung entnehmen kann , ist in
der an der Zugmaschine montierten Gruppe A eine Steuerungsbüchse 10 , ein Strömungsteiler 11 und eine Bremsensteuerung 12 vorgesehen .

Die Steuerungsbüchse 10 ist von bekannter Art und
ist im Prinzip auf allen mit hydraulischen Anlagen versehenen Zugmaschinen vorhanden . Diese Steuerungsbüchse
10 ist mit einem Eingang 13 versehen , in den das Rücklauffluid vom Strömungsteiler 11 über die Leitung 14
und das Rücklauffluid von der Bremsensteuerung 12 über die Leitung 15 gelangen . Die Steuerungsbüchse ist weiters mit einem Ausgang 16 versehen , über den das unter Druck stehende Fluid vermittels der Leitung 17 zum Strömungsteiler 11 gelangt .

Dieser Strömungsteiler , welcher in der erfindungsgemässen Anlage eine grundlegende Funktion hat , ist mit einem Eintritt für die Leitung 17 versehen , über den das unter Druck stehende Fluid in das Innere von ihm gelangt , und von dem genannten Strömungsteiler geht das unter Druck stehende Fluid über den Ausgang 18 zur Bremsensteuerung 12 vermittels der Leitung 19 . Der Strömungsteiler sorgt gleichzeitig dafür einen Teil des von der Steuerungsbüchse kommenden Fluidflusses über den Ausgang 20 gegen die Schnellkupplung 1 hin und von dort zum Anhänger oder zu den Anhängern abzulenken . Das unter Druck stehende Fluid kehrt vermittels des Ventils 21 zur Steuerungsbüchse 10 zurück .

Wie angedeutet hat der Strömungsteiler zwei grundlegende Ausgänge 18,20 , von denen der Ausgang 18 dazu dient die Bremsensteuerung 12 der Zugmaschine zu betätigen und er bringt das Fluid über die Leitung 15 zum Steuergehäuse , d.h. zur Steuerungsbüchse zurück . Der andere Ausgang 20 geht über die Leitung 22 zur Schnellkupplung 1 zur Betätigung der am Anhänger vorgesehenen Gruppe . Die Schnellkupplung 1 wird im einzelnen die

0099862

Leitung 22 mit der am Anhänger vorgesehenen Leitung 32 zur Betätigung des automatischen Ventils verbinden , von dem nachstehend gesprochen wird . Die Bremsensteuerung 12 hat einen Ausgang 23 , welcher unter Druck stehendes Fluid über die Leitung 24 zur zweiten Schnellkupplung 2 bringt . Die zweite Schnellkupplung bringt über die Leitung 33 Fluid zum in der Gruppe B vorgesehenen automatischen Ventil , welche an jedem Anhänger montiert ist .

Aus den vorstehenden Anführungen ist eindeutig , dass die Bremsensteuerung dafür sorgen wird unter Druck stehendes Fluid sowohl zum ersten Fahrzeug oder zur Zugmaschine als auch zum automatischen Steuerventil der Bremse am Anhänger oder besser zum automatischen Ventil 30 der Gruppe B zu schicken . Die Gruppe B , d.h. die an jedem Anhänger montierte Gruppe , ist mit einem automatischen Ventil 30 und mit einem ganz allgemein mit der Bezugsnummer 31 angegebenen Ausgleichsbehälter versehen . Das automatische Ventil 30 ist mit fünf Öffnungen versehen , u.zw. eine Öffnung 34 , in welche das unter Druck stehende Fluid über die Leitung 32 und die Schnellkupplung 1 gelangt , eine Öffnung 35 , über welche unter Druck stehendes Fluid von der Schnellkupplung 2 und der Leitung 33 gelangt , eine Öffnung 36 , über welche unter Druck stehendes Fluid fliesst , welches vermittels der Rohrleitung 37 die Bremsen 39 des Anhängers speisst , eine Öffnung 40 , über welche Fluid vom Ausgleichsbehälter 31 vermittels der Leitung 41 gelangt , und eine Öffnung 42 , über welche unter Druck stehendes Fluid vermittels eines Rückschlagventils 43 zum Ausgleichbehälter 31 gelangt . Daraus ergibt sich , dass über die Öffnung 23 der Gruppe A und

die Leitungen 24 und 33 unter Druck stehendes Fluid von der Bremsensteuerung in das automatische Ventil gelangt und bei Ruhebedingungen der Anlage über die Öffnung 42 und das Rückschlagventil 43 den Ausgleichsbehälter 31 beaufschlägt . Gleichzeitig wird die Bremse betätigt .

Der Ausgleichsbehälter 31 ist aus einem Zylinder gebildet , in dem sich ein Schieber 44 gegen die Wirkung eines elastischen Körpers 45 , vorzugsweise einer Feder , bewegt . Durch die Einwirkung des Druckes , welchen das Fluid des Ventils 30 über die Öffnung 42 und das Ventil 43 ausübt , wird der Raum 46 des Ausgleichsbehälters unter Zusammendrückung der Feder oder des elastischen Körpers 45 beladet . Im Ausgleichsbehälter 31 hat man somit eine Speicherung , bzw. Anhäufung von unter Druck stehendem Fluid , welche konstant auf einen vorbestimmten Druck gehalten wird .

Wie angedeutet bringt vom Raum 46 des Ausgleichsbehälters 31 eine Leitung 41 Fluid zum automatischen Ventil 30 , und dieser Fluiddurchgang wird nur dann erfolgen , wenn im automatischen Ventil ein Druck vorhanden ist , welcher geringer ist als jener im Raum 46 . Anderseits kann das im Raum 46 enthaltene unter Druck stehende Fluid augrund der Einwirkung des Rückschlagventils 43 nicht zum automatischen Ventil 30 zurückkehren .

Nachdem vorstehend die Anordnung der Bremsanlage kurzgefasst , aber in der Annahme hinreichend klar erläutert wurde , wird nun nachstehend die Betriebsweise derselben beschrieben .

Wie angedeutet fliesst von der Steuerungsbüchse 10 das unter Druck stehende Fluid zum Strömungsteiler 11 , welcher unter Druck stehendes Fluid über die Leitungen 19 und 22 beziehungsweise zur Bremsensteuerung 12 der Zugmaschine und zur Schnellkupplung 1 schickt . Das Fluid fliesst von der Bremsensteuerung 12 zur Bremsvorrichtung der Zugmaschine , um nachher zur Steuerungsbüchse zurückzukehren , und zur Schnellkupplung 2 , über welche es in das automatische Ventil 30 zusammen mit dem Fluid einfliesst , welches von der Öffnung 20 und der Leitung 22 kommt . Zu diesem Zeitpunkt erhält das automatische Ventil unter Druck stehendes Fluid , welches über die Öffnung 42 zum Raum 46 des Ausgleichsbehälters 31 geht und über die Öffnung 36 zu den Bremsen 39 geht . Im Fall des normalen Betriebes mit einwandfrei arbeitenden Schnellkupplungen 1 und 2 geht die von der Bremsensteuerung 12

über die Schnellkupplung 2 und die Leitung 57 ausgeübte

Bremswirkung auf die Bremsen 39 des Anhängers über .

Für den Fall , dass sich die Kontinuität zwischen

den Leitungen 22 und 32 und 24 und 33 aus einem beliebigen Zufall unterbrechen sollte , kehrt das unter Druck stehende Fluid , da die Öffnungen 34 und 35 mit Rückschlagventilen versehen sind , über die Leitung 41 vom Raum 46 des Ausgleichsbehälters 31 zum automatischen Ventil 30 zurück und geht von hier über die Leitung 37 zu den Bremsen 39 des Anhängers . Mit anderen Worten durch einen Druckunterschied , welcher sich infolge der Unterbrechung der Kontinuität zwischen den Leitungen 22 und 32 und 24 und 33 einstellt , hat man einen Eingriff des im Raum 46 des Ausgleichsbehälters 31 enthaltenen unter Druck stehenden Fluids , wobei das unter Druck stehende Fluid die Bremsvorrichtung 39 des Anhängers automatisch betätigen wird .

Wie vorstehend angedeutet ist der grundlegende Unterschied dieser Vorrichtung im Gegensatz zu den angewandten Dauerbremsvorrichtungen darin zu sehen , dass die Bremswirkung von  der Steuerungsbüchse 10 der Bremsensteuerung 12 und nicht vom Eingriff des Ausgleichsbehälters 31 entfaltet wird , welcher Eingriff auf die

alleinigen Notbedingungen begrenzt ist . Daraus ergibt

0099862

sich , dass die Verbindung zwischen den Gruppen A und B der Vorrichtung einen durchgehenden Betrieb der Bremse gestattet , ohne dass dabei ein ausführlicher Eingriff des an jedem Anhänger zugegenen Ausgleichsbehälters stattfindet .

Anderseits , wie bereits angedeutet , während bei der erfindungsgemässen Dauerbremsanlage jede beliebige Fluidart Anwendung finden kann , zieht man es vor das hydraulische Fluid zu verwenden , mit dem die hydraulische Anlage der Zugmaschine arbeitet , und dies aus zwei grundlegenden Motiven : erstens , die Tatsache , dass eine Aufstellung von besonderen Kompressoren nicht erforderlich ist , da eine Steuerbüchse bei jedem Fahrzeug normalerweise vorhanden ist , und sollte dies nicht zutreffen , kann diese äusserst einfach einmontiert werden ; zweitens , ein Verlust von hydraulischem Fluid wird sofort festgestellt und lokalisiert , weshalb die Wartungs- und Instandsetzungsarbeiten ausserordentlich einfach sind . Drittens wäre noch zu bemerken , dass die verwendete hydraulische Flüssigkeit wegen ihrer Flüssigkeitsqualität praktisch unverdichtbar ist , weshalb jeder beliebiger auf dieselbe ausgeübter Druck unmittelbar auf den Benutzerapparat , d.h. auf die verschiedenen Bremsvorrichtungen übertragen wird .

Die von einer erfindungsgemässen Dauerbremsanlage dargebotenen Vorteile sind offensichtlich . Im einzelnen ist festzustellen , dass Bremsmittel zur Anwendung kommen , welche normalerweise und laufend an allen Strassenfahrzeugen verwendet werden und an Schienenfahrzeugen leicht montierbar sind . Es wird ein hydraulisches Fluid verwendet , welches an und für sich die höchsten Leistungsfähigkeits- und Zuverlässigkeitsgarantien bietet . Es werden weiters Mittel verwendet , die auf allen Fahrzeugen einschliesslich der landwirtschaftlichen Traktoren vorhanden sind , welche wohl mit Abtrieben versehen sind , jedoch im Prinzip nicht an Anhäger angeschlossen sind , welche ebenso gut mit Bremsvorrichtungen versehen sind .

Die erfindungsgemässe Dauerbremsanlage wurde vorstehend anhand einer nicht einschränkenden Ausführungsform schematisch und beispielsweise beschrieben und erläutert . So könnten an derselben naheliegenderweise noch alle jene Abänderungen baulicher Natur vorgenommen werden , welche von der Technik und bei der praktischen Verwirklichung angeraten werden sollten , ohne damit vom eigentlichen Rahmen der Erfindung abzuweichen , welche aus den nachstehenden Patentansprüchen nochmals zu entnehmen ist .

Anmelder : Roberto FERRUZZA , Ribera (Agrigento/<span>0099862</span>

"Dauerbremsanlage"

Patentansprüche

1.)Dauerbremsanlage ,

dadurch gekennzeichnet , dass sie aus zwei Gruppen gebildet ist , von denen die eine (A) an der Zugmaschine montiert ist und die zweite (B) an jedem Anhänger montiert ist , wobei das charakteristische und grundlegende Element der ersten Gruppe eine Strömungsteiler-Vorrichtung (11) ist und das grundlegende Element jeder zweiten Gruppe ein an ein automatisches Ventil gekoppelter Ausgleichsbehälter (31) ist .

2.)Dauerbremsanlage , nach Anspruch 1 ,

dadurch gekennzeichnet , dass die an der Zugmaschine montierte Gruppe (A) ausser mit einer Steuerungsbüchse (10) mit einem Strömungsteiler (11) und mit einer Bremsensteuerung (12) versehen ist , wobei der Strömungsteiler (11) vier Öffnungen aufweist , über eine von denen das unter Druck stehende Fluid von der Steuerungsbüchse (10) kommt und über die anderen drei (21-20-18) das in den Strömungsteiler gelangte und geteilte Fluid austritt , derart um die Rückkehr des überschüssigen Fluids zur Steuerungsbüchse (10) , die Sendung von unter Druck stehendem Fluid zur ersten Schnellkupplung (1) und zur zweiten Gruppe (B) und eines anderen Fluidanteils zur Bremsensteuerung (12) für die Bremsung der Zugmaschine und die Sendung zur zweiten Schnellkupplung (2) zu gestatten .

3.) Dauerbremsanlage , nach Anspruch 1 und 2 , dadurch gekennzeichnet , dass die an jedem Anhänger montierte Gruppe (B) mit einem automatischen Ventil (30) versehen ist , welches unter Druck stehendes Fluid vom Strömungsteiler (11) und von der Bremsensteuerung (12) erhält und unter Druck stehendes Fluid zur Bremse (39) des Anhängers schickt , während es einen Ausgleichsbehälter (31) mit unter Druck stehendem Fluid speist .

4.) Dauerbremsanlage , nach Anspruch 3 , dadurch gekennzeichnet , dass der Ausgleichsbehälter (31) von unter Druck stehendem Fluid mit einen Raum (46) versehen ist , welcher Fluid vom automatischen Ventil (30) gemäss Anspruch 3 und von der Speiseleitung vom Strömungsteiler (11) und von der Bremsensteuerung (12) erhält , wobei sich der Ausgleichsbehälter (31) gegen die Wirkung eines elastischen Körpers (45) füllt und einen Ausgang hat , welcher an das automatische Ventil (30) gemäss Anspruch 3 angeschlossen ist .

5.) Dauerbremsanlage , nach einem oder mehreren der vorstehenden Ansprüche , dadurch gekennzeichnet , dass das im Raum (46) des Aus-

- 3 -

0099862

gleichsbehälters (31) gemäss Anspruch 4 enthaltene Fluid in das automatische Ventil (30) nur infolge der Unterbrechung der normalen Speiseleitungen des letzteren zugelassen wird , wobei jeder im automatischen Ventil (30) gemäss Anspruch 3 vorgesehener Eingang von einem Rückschlagventil gebildet ist .

0099862

**0099862**

Nummer der Anmeldung

EP 83 83 0041

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | LUEGER "Lexikon der Technik", Band 12 "Lexikon der Fahrzeugtechnik", 1967, DEUTSCHE VERLAGS-ANSTALT, Stuttgart, Seite 393 <br> * Seite 393, Bild 7 * | 1-5 | B 60 T 13/14 |
| X | DE-A-2 852 616 (CLAYTON DEWANDRE) <br> * Ganzes Dokument * | 1-5 | |

**RECHERCHIERTE SACHGEBIETE (Int. Cl. ³)**

B 60 T 13/00

Der vorliegende Recherchenbericht wurde für alle Patentansprüche erstellt.

| Recherchenort <br> BERLIN | Abschlußdatum der Recherche <br> 09-06-1983 | Prüfer <br> LUDWIG H J |
|---|---|---|